(19) Europäisches Patentamt
European Patent Office
Office européen des brevets

(11) **EP 1 341 094 B1**

(12) **FASCICULE DE BREVET EUROPEEN**

(45) Date de publication et mention
de la délivrance du brevet:
**21.11.2007 Bulletin 2007/47**

(51) Int Cl.:
***G06F 17/17*** *(2006.01)*

(21) Numéro de dépôt: **03290450.0**

(22) Date de dépôt: **25.02.2003**

(54) **Procédé pour la détermination d'un indice de qualité spatiale de données regionalisées**

Verfahren zur Ermittlung eines räumlichen Qualitätsindexes für Regionaldaten

Method for determining a spatial quality index for regionalized data

(84) Etats contractants désignés:
**AT BE BG CH CY CZ DE DK EE ES FI FR GB GR HU IE IT LI LU MC NL PT SE SI SK TR**

(30) Priorité: **27.02.2002 FR 0202578**

(43) Date de publication de la demande:
**03.09.2003 Bulletin 2003/36**

(73) Titulaire: **Earth Resource Management Services (ERM.S)**
**77300 Fontainebleau (FR)**

(72) Inventeur: **Sandjivy, Luc**
**77210 Fontainebleau-Avon (FR)**

(74) Mandataire: **de Saint-Palais, Arnaud Marie**
**Cabinet Moutard,**
**35, rue de la Paroisse**
**78000 Versailles (FR)**

(56) Documents cités:
**US-B1- 6 185 512**

- **ABARCA-HERNANDEZ F ET AL: "EVALUATION OF GEOSTATISTICAL MEASURES OF RADIOMETRIC SPATIAL VARIABILITY FOR LITHOLOGIC DISCRIMINATION IN LANDSAT TM IMAGES" PHOTOGRAMMETRIC ENGINEERING AND REMOTE SENSING, AMERICAN SOCIETY FOR PHOTOGRAMMETRIC AND REMOTE, US, vol. 65, no. 6, juin 1999 (1999-06), pages 705-711, XP008009097 ISSN: 0099-1112**
- **SANDJIVY L: "THE FACTORIAL KRIGING ANALYSIS OF REGIONAIZED DAA. TIS APPLICATION TO GEOCHEMICAL PROSPECTING" NATO ASI SERIES. SERIES C: MATHEMATICAL AND PHYSICAL SCIENCES, REIDEL, DORDRECHT, NL, vol. 122, no. PART 1, 1984, pages 559-571, XP008008289 ISSN: 0258-2023**

**Description**

La présente invention concerne un procédé pour la détermination d'un indice de qualité spatiale de données régionalisées.

Elle s'applique plus particulièrement, mais non exclusivement, aux données géophysiques, aux données d'imageries obtenues par des méthodes physiques telles qu'imagerie médicale, sonar, contrôle non destructif de matériaux ou encore à tout type d'échantillonnage de phénomènes naturels tels que campagnes de reconnaissance minière, inventaires géochimiques, capteurs de pollutions, données satellite, océanographiques, analyse d'eau...

Les données régionalisées sont des données repérées par des coordonnées dans un espace à N dimensions, le plus couramment dans un espace géographique à une, deux ou trois dimensions. Ces données peuvent être mono ou multivariables, c'est-à-dire qu'une ou plusieurs variables sont mesurées ou calculées aux points de données. La théorie des variables régionalisées est connue sous le nom de **géostatistique**. La géostatistique est l'application des probabilités aux phénomènes naturels qui se développent dans l'espace et dans le temps, d'où le préfixe géo. Cette théorie se trouve notamment exposée dans l'ouvrage « La théorie des variables régionalisées » de G. MATHERON (MASSON Editeur).

Cette théorie fournit le langage et les outils appropriés à l'estimation de toute quantité, inconnue a priori, repérable dans un espace donné, à partir d'un échantillonnage forcément fragmentaire de cette même quantité.

Pour estimer cette quantité inconnue, la géostatistique propose de choisir judicieusement le modèle probabiliste le plus approprié à la situation, l'estimateur géostatistique étant connu sous le nom de krigeage. Plus que l'estimation, le modèle probabiliste donne également un indicateur de la précision de l'estimation. Cet indicateur, appelé variance d'estimation, est un outil précieux car il ouvre la voie à une possible gestion des incertitudes (traduites en termes de variance). Dans le cadre des modèles probabilistes stationnaires, qui suppose l'invariance par translation dans l'espace de la moyenne de la variable modélisée, l'outil covariance ou variogramme est utilisé pour quantifier la variabilité spatiale des données. Pour un modèle non-stationnaire, c'est la covariance généralisée qui est employée. Les modèles géostatistiques permettent également d'anticiper valablement sur un état futur, par exemple de l'exploitation de la ressource naturelle, lorsque les données disponibles seront plus nombreuses et les problèmes d'estimation se poseront différemment à l'opérateur.

Quel que soit le contexte métier de l'exploitation de la ressource naturelle, la question se pose toujours de l'adéquation des données disponibles à la résolution du problème opérationnel. A la qualité intrinsèque de chaque donnée s'ajoute la qualité de l'intégration spatiale de cette donnée au sein du jeu entier. C'est la raison pour laquelle il est intéressant de compléter le relevé expérimental par un contrôle géostatistique associé à des coordonnées géographiques, temporelles ou autres -voir, par exemple, le brevet US 6 185 512.

Les procédés habituels de contrôle de qualité ou de cohérence des jeux de données régionalisées sont soit visuels, soit morphologiques (études des formes) soit statistiques (sans prendre en compte les coordonnées spatiales). Lorsqu'ils sont utilisés, les procédés de filtrage (fréquentiels ou spatiaux) travaillent généralement sur des données monovariables et sur des grilles régulières. En conséquence, ils sont mal adaptés à la décomposition de données multivariables irrégulièrement situées dans l'espace en composantes anomalique et cohérente. De même, la définition des critères utilisés pour définir les anomalies est souvent arbitraire et se prête mal à la vérification expérimentale.

En vue de supprimer ces inconvénients, l'invention propose de quantifier la qualité spatiale d'un jeu de données régionalisées au travers de la détermination d'un indice géostatistique appelé SQI pour « Spatial Quality Index » (Indice de Qualité Spatiale), cet indice étant utilisé pour localiser des données a priori anomaliques et ainsi juger de la qualité des mesures ou du traitement numérique qui ont généré le jeu de données.

La détermination du SQI résout à la fois le problème de l'interprétation des variations spatiales des données mono ou multivariables en termes généraux d'anomalies et de composante cohérente et l'estimation du degré d'anomalie ou d'incohérence spatiale présent dans chaque donnée prise individuellement. La détermination du SQI ne suppose aucune disposition particulière des données dans l'espace et travaille aussi bien des données irrégulièrement réparties dans l'espace que régulièrement situées aux noeuds d'une grille à N dimensions, par exemple une grille d'acquisition à trois dimensions de données géophysiques réparties irrégulièrement est définie selon deux axes longitudinal-transversal d'acquisition des données et un troisième axe vertical temps.

Avantageusement, la détermination de cet indice se fait grâce au procédé selon l'invention qui comprend les phases opératoires suivantes :

- une première phase d'identification des anomalies statistiques d'un premier ordre à partir du jeu de données régionalisées brutes, cette identification comprenant une stationnarisation des données par extraction préliminaire des dérives spatiales desdites données et la détermination des résidus stationnaires associés, dits de premier ordre,,

de manière à ce que la valeur de la moyenne de données résiduelles soit raisonnablement constante dans l'espace, les anomalies étant identifiées et examinées sur les résidus de premier ordre de manière à fournir un premier critère d'anomalie du premier ordre,

- une deuxième phase d'identification d'anomalies statistiques d'un second ordre avec extraction des composantes des résidus de premier ordre considérées comme anomaliques et des composantes des résidus de premier ordre considérées comme cohérentes dans l'espace,
- l'établissement d'une relation quantifiée (SQI) entre toute combinaison des valeurs estimées des composantes anomaliques du premier et/ou du second ordre et toute combinaison des valeurs estimées des composantes cohérentes du premier et/ou du second ordre,
- la localisation des anomalies spatiales à partir des valeurs du SQI de chaque donnée régionalisée.

Avantageusement, ledit établissement d'une relation quantifiée est la détermination, pour chaque donnée régionalisée prise individuellement, du rapport d'un indice de qualité spatiale (SQI).

Bien entendu, les susdites phases d'identification pourront s'effectuer par estimation géostatistique (krigeage), en modèle non-stationnaire pour la première phase et en modèle stationnaire pour la deuxième phase.

Dans la première phase, l'estimation non-stationnaire de la dérive spatiale permet l'obtention de résidus stationnaires du premier ordre sur lesquels il est possible de calculer et modéliser valablement un variogramme.

L'interprétation de ce variogramme en terme de composantes cohérente et anomalique conduit à l'estimation par modèle stationnaire de la composante anomalique du second ordre.

Plus particulièrement, les modèles géostatistiques stationnaire et non-stationnaire pourront utiliser :

- l'estimation par krigeage factoriel des composantes anomalique et cohérente des résidus,

- la définition du voisinage de krigeage adaptée à l'estimation de chacune desdites composantes anomalique et cohérente.

Bien entendu, à chacune des susdites étapes, l'analyse pourra être facilitée par un contrôle visuel 3D réalisé, d'une part, au moyen d'une interpolation sur un fichier « grille » de n'importe quelle variable irrégulièrement échantillonnée provenant d'un fichier «point» et, d'autre part, au moyen d'un code de couleur associé à la valeur de la variable interpolée.

Un mode d'exécution de l'invention sera décrit ci-après, à titre d'exemple non limitatif, avec référence aux dessins annexés dans lesquels :

La figure 1 est une représentation schématique illustrant les phases principales de détermination de l'indice de qualité spatiale (coefficient d'anomalies spatiales) dans un contexte de traitement de données géophysiques ;

Les figures 2a, 2b et 2c sont des représentations des différents formats de fichiers utilisés dans le procédé selon l'invention ;

Les figures 3a et 3b sont respectivement la représentation d'un histogramme fréquentiel (figure 3a) et d'un diagramme temps-vitesse (figure 3b) ;

La figure 4 est une représentation des affichages permettant un contrôle visuel des étapes du procédé ;

La figure 5 est une représentation de l'interpolation effectuée pour permettre les affichages de la figure 4 ;

La figure 6 est une représentation d'un variogramme expérimental de résidus ;

Les figures 7a et 7b sont des représentations des modes de localisation et de quantification d'anomalies spatiales.

Cet exemple concerne plus particulièrement l'acquisition et le traitement des données sismiques 3D pour la caractérisation des réservoirs pétroliers et plus particulièrement le contrôle qualité des mesures de vitesses géophysiques ou vitesses de « stack ».

Le problème est le suivant : le contracteur sismique propose à l'opérateur pétrolier un jeu de vitesses pointées manuellement pour l'opération de « stack » qui conditionne la qualité des données finales. L'opérateur pétrolier est chargé de la supervision du travail du contracteur et doit donner son avis sur la qualité du pointé de vitesse.

A cet effet, il peut ausculter les cubes de pointés de vitesses de « stack » à l'aide d'outils statistiques et géostatistiques en vue d'identifier les incohérences spatiales dues à des pointés erronés.

La détermination du SQI, conformément au procédé selon l'invention, contribue à définir les pointés jugés anomaliques qu'il convient de reprendre pour garantir une homogénéité spatiale qui sera elle-même quantifiée par la valeur de l'indice SQI.

Chaque pointé de vitesse de « stack » est défini par ses coordonnées spatiales - géographiques et temporelle - et une valeur de vitesse géophysique. Dans le domaine spatial décrit par tous les pointés, une modélisation probabiliste permet de séparer un bruit spatial, organisé ou non, d'un signal (spatialement) cohérent. Le bruit spatial est censé correspondre à des artefacts d'acquisition et de traitement. Quantifié, il permet l'identification rapide des pointés problématiques selon un seuil de tolérance déduit d'impératifs de qualité géophysique ou autre (par exemple, dans le cas du « stack », préservation des amplitudes du signal sismique).

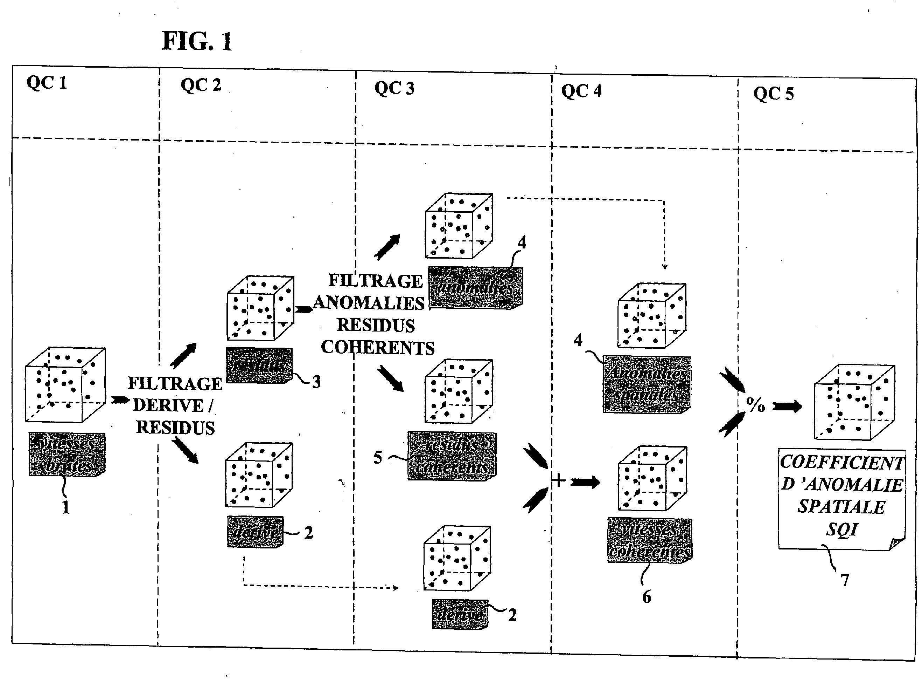

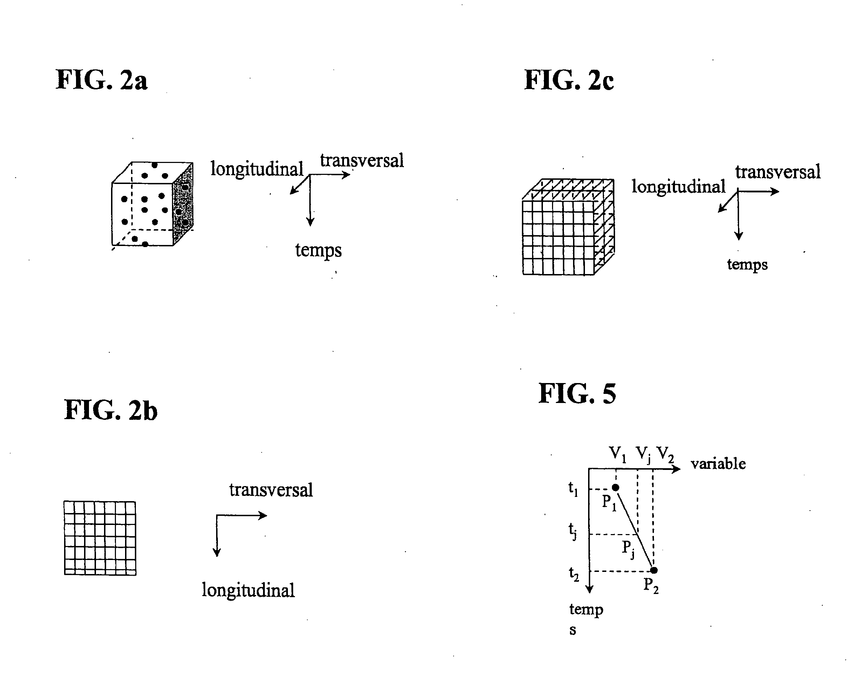

Dans le processus de détermination de l'indice SQI illustré figure 1, le système de coordonnées retenu est le système sismique axe longitudinal (inline) - axe transversal (crossline) -temps (Figure 2a). En effet, toute la chaîne géophysique, de l'acquisition au traitement sismique, privilégie ces trois directions principales : la verticale (le temps) et les directions horizontales (inline, crossline) définies par le dispositif d'acquisition. Par conséquent, la plupart des artefacts d'acquisition et de traitement sont générés le long de ces directions et c'est le long de ces directions qu'est orientée l'analyse. Ce processus permet donc de réduire le temps de détermination.

D'une façon plus précise, le processus fait intervenir trois types de fichiers :

- un fichier « point » 3D (cube de pointés de vitesse de « stack ») (Figure 2a), défini par l'ensemble des positions de pointés de vitesses dans un repère de coordonnées axe longitudinal (inline) - axe transversal (crossline) - temps, il est généralement à pas régulier dans le plan horizontal (axe longitudinal (inline) - axe transversal (crossline)) et irrégulier en temps,

- un fichier « grille » 2D (Figure 2b) : à pas régulier et défini suivant les axes longitudinal (inline) - transversal (crossline), il sert à réaliser des statistiques directionnelles le long de la verticale (axe temps du fichier point 3D de la figure 2a); des statistiques suivant la direction longitudinale ou la direction transversale peuvent être envisagées,

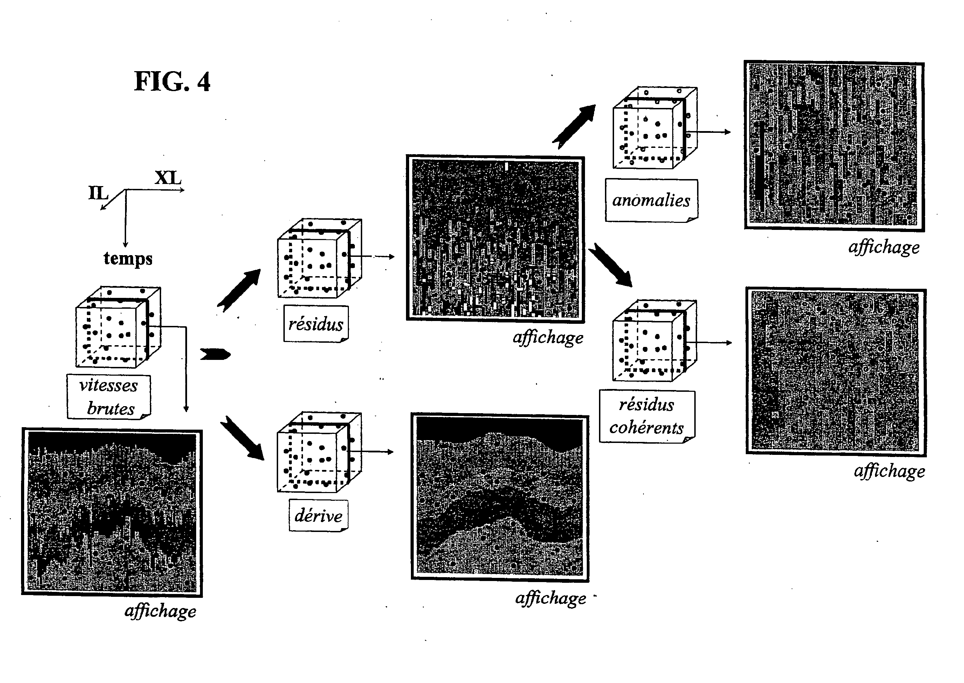

- un fichier « grille » 3D (Figure 2c) : à maille régulière dans un repère de coordonnées (axe longitudinal (inline) - axe transversal (crossiine) - temps), il sert pour divers affichages comme il sera expliqué par la suite (Figure 4).

Conformément à la méthodologie illustrée figure 1, le cube de pointés de vitesses de « stack» une fois chargé est soumis à un contrôle de qualité géostatistique (calcul de SQI). Les vitesses brutes 1 sont décomposées au premier ordre par krigeage factoriel en une dérive spatiale 2 (composante « basse fréquence ») et des résidus stationnaires 3 (phase QC1). La cohérence spatiale des résidus de premier ordre est modalisée (à l'aide d'un variogramme) (phase QC2) pour réaliser un filtrage discriminant par krigeage factoriel entre un bruit spatial 4, résidu du second ordre, et une partie cohérente du second ordre 5 censée être « nettoyée » des artefacts d'acquisition et de traitement (phase QC3). Cette partie résiduelle cohérente de second ordre est additionnée à la dérive 2, partie cohérente de premier ordre, de manière à engendrer un cube de pointés de vitesses spatialement cohérents 6 (QC4). Dans cet exemple , le SQI est constitué par le rapport entre le bruit, résidu du second ordre, et la partie cohérente de la donnée, somme des composantes cohérentes du premier et/ou second ordre et conduit à l'obtention d'un cube d'anomalie spatiale 7 (phase QC5) : chaque pointé est ainsi caractérisé par son indice de qualité spatiale (SQI) qui exprime le pourcentage de bruit spatial par rapport à la partie spatialement cohérente.

Les statistiques expérimentales calculées au cours du processus se répartissent en :

- statistiques de base,
- statistiques directionnelles,
- variogramme expérimental.

L'ensemble des pointés de vitesses de « stack » et des résidus de premier ordre forment des distributions qui peuvent être rapidement analysées grâce à des outils prenant en compte divers paramètres tels que son nombre d'échantillons, ses extrema, sa moyenne arithmétique, son écart type, sa variance :

- son nombre d'échantillons N qui caractérise une distribution $V_i$ (vitesses brutes, résidus, dérives, anomalies, résidus filtrés, vitesses filtrées...),

- ses extrema :

$$\text{minimum} = \min(V_i)$$

$$\text{maximum} = \max\left(V_i\right)$$

- sa moyenne arithmétique :

$$m = \frac{1}{N}\sum_{i=1}^{N} V_i$$

- son écart type :

$$\sigma = \sqrt{\frac{1}{N}\sum_{i=1}^{N}\left(V_i - m\right)^2}$$

- sa variance :

$$\sigma^2 = \frac{1}{N}\sum_{i=1}^{N}\left(V_i - m\right)^2$$

Cette analyse peut être complétée au moyen :

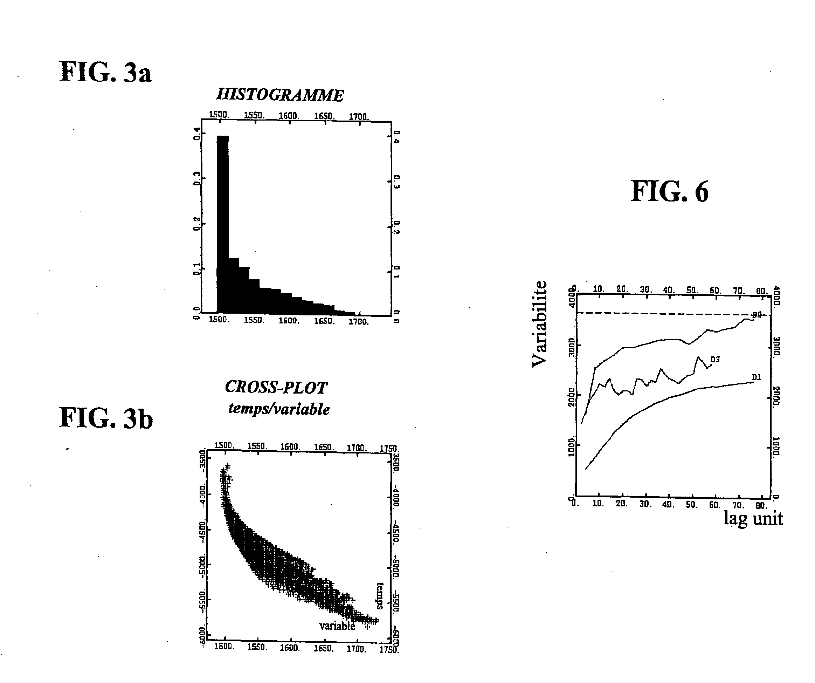

- d'un histogramme fréquentiel dans lequel les valeurs $V_i$ de la variable sont regroupées en classes, l'histogramme fréquentiel étant la représentation des fréquences correspondant à ces classes (Figure 3a),
- d'un diagramme (« cross-plot ») temps-vitesse (Figure 3b).

Il s'avère que les artefacts d'acquisition et de traitement ont comme axes principaux les axes longitudinal, transversal et temps. Le calcul d'une grandeur statistique le long d'une de ces trois directions peut conduire à l'identification d'un ou de plusieurs artefacts ainsi renforcés. En conséquence, les trois grandeurs statistiques calculées selon ces directions pourront se limiter au nombre d'échantillons, à la moyenne arithmétique et à la variance (ou l'écart type).
Aux outils d'analyse précédemment mentionnés se rajoute le variogramme expérimental des résidus de premier ordre. Le variogramme permet de quantifier la corrélation spatiale d'une variable régionalisée $V(\vec{r})$, $\vec{r}$ étant le vecteur position défini dans le système de coordonnées longitudinal-transversal -temps. Sa formule se déduit de celle du variogramme théorique qui concerne la fonction aléatoire $V(\vec{r})$ pour laquelle on ne dispose que d'une seule réalisation : la variable régionalisée.
Variogramme théorique :

$$\gamma(\vec{h}) = \frac{1}{2}\,\text{Var}\left[V(\vec{r} + \vec{h}) - V(\vec{r})\right]$$

où $\vec{h}$ est le vecteur caractérisant un ensemble de couples de pointés

Variogramme expérimental (après hypothèses de stationnarité et d'ergodicité...) :

$$\Gamma(\vec{h}) = \frac{1}{2N(\vec{h})} \sum_{n=1}^{N(\vec{h})} \left[ V(\vec{r}_n + \vec{h}) - V(\vec{r}_n) \right]^2$$

où $N(\vec{h})$ est le nombre de couples de pointés séparés de $\vec{h}$.

Par ailleurs, l'analyse pourra être facilitée grâce au mode d'affichage illustré figure 4.

Selon ce mode d'affichage, l'interpolation sur grille (à pas régulier) de n'importe quelle variable irrégulièrement échantillonnée (fichier « point ») permet, grâce à un code de couleur associé à la valeur de la variable interpolée, un contrôle visuel 3D rapide.

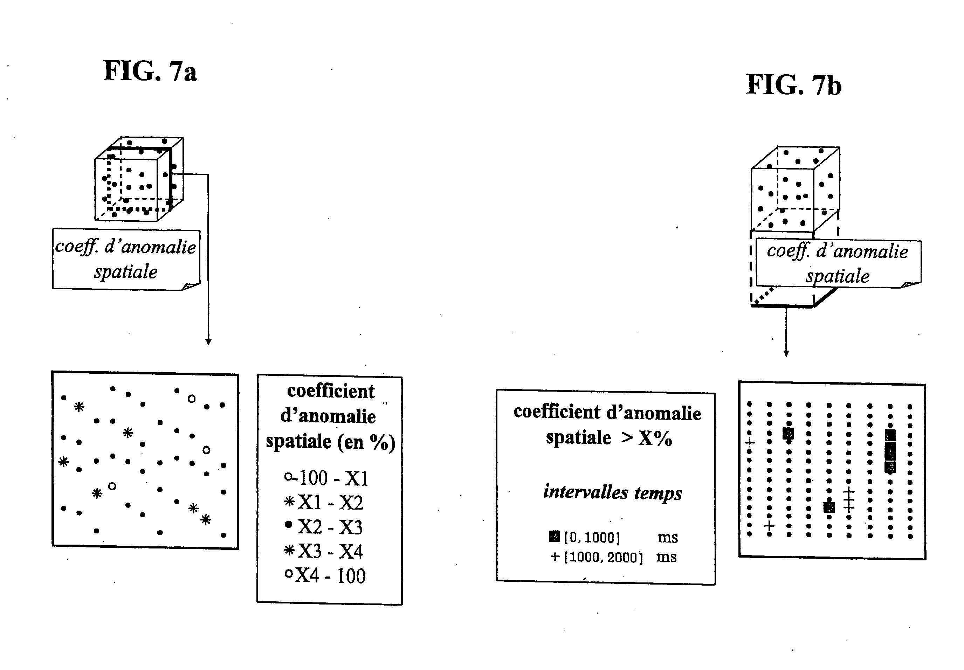

L'interpolation retenue pour l'affichage est définie de la manière suivante (Figure 5): à un noeud de grille $P_j$, la valeur estimée correspond à l'interpolation linéaire des deux pointés $P_1$, $P_2$ respectivement définis par les coordonnées $(t_1, V_1)$ et $(t_2, V_2)$ les plus proches situés de part et d'autre du noeud $P_j$ et sur la même verticale que celui-ci.

$$V_j = V_1 + \left( \frac{t_j}{t_2 - t_1} \right) \times \left( V_2 - V_1 \right)$$

D'autres types d'interpolation plus élaborés, comme le krigeage par exemple, pourraient être envisagés pour l'affichage, si le besoin s'en faisait sentir.

Les étapes de filtrage et de détermination des anomalies utilisées dans la méthodologie illustrée figure 1 seront décrites ci-après :

a) Etape de filtrage dérive/résidus

Un champ de vitesses présente généralement une dérive verticale due à la compaction, la compaction étant l'augmentation de la vitesse en fonction de l'augmentation de la profondeur d'enfouissement (une dérive horizontale peut également exister, si on considère le fond de la mer par exemple pour l'acquisition de données sismiques marines). On observe une non-stationnarité des vitesses dans cette direction qui peut être gérée par la théorie des covariances généralisées, modèle géostatistique non-stationnaire. Mais une covariance généralisée ne peut pas être interprétée « à la main » en terme de composantes spatiales cohérentes et anomaliques, rendant ipso facto impossible l'ajustement d'un modèle en conséquence. Il faut donc extraire cette dérive et travailler sur les résidus stationnaires associés.

L'extraction d'une dérive assurant la stationnarité des résidus est réalisée par l'ajustement polynomial par moindres carrés qui est un cas particulier de krigeage factoriel : la valeur de la dérive en un point de l'espace correspond à la valeur d'un polynôme ajustant au mieux (moindres carrés) les points (indépendants) appartenant à un voisinage centré autour du point à estimer. Le type du polynôme - 1 z, 1 z $z^2$, 1 x z $x^2$ $z^2$ xz, etc - est à déterminer suivant le type de dérive que l'on désire extraire, z étant le temps et x étant une coordonnée géographique. Les dimensions du voisinage d'extraction de krigeage doivent garantir la stationnarité des résidus de premier ordre.

Exemple : extraction d'une dérive de type 1 z $z^2$ au point $\vec{r}_0$ :

$$V_{\text{dérive}}(\vec{r}_0) = a + b \times z_0 + c \times z_0^2 \quad \text{avec} \quad \vec{r}_0(x_0, y_0, z_0)$$

Les coefficients du polynôme (a, b et c) sont obtenus en minimisant le système :

$$\sum_{i=1}^{N_v} \left[ \left( a + b \times z_i + c \times z_i^{\,2} \right) - V(\vec{r}_i) \right]^2$$

où $N_v$ est le nombre d'échantillons contenus dans le voisinage centré autour du point à estimer.

b) Filtrage anomalies/résidus cohérents

La dérive, composante cohérente de premier ordre, précédemment estimée est soustraite des vitesses de «stack» brutes. Les résidus de premier ordre doivent être stationnaires.

$$V_{r\acute{e}sidu}(\vec{r}_0) = V(\vec{r}_0) - V_{d\acute{e}rive}(\vec{r}_0)$$

L'analyse variographique des résidus de premier ordre est la phase cruciale du contrôle de qualité spatiale.

Le variogramme expérimental des résidus $\Gamma(\vec{h})$ est calculé dans plusieurs directions. Pour des raisons de clarté des figures, seules les composantes dans les trois directions principales (longitudinale, transversale, temps) sont représentées sur la figure 6.

La modélisation du variogramme est subordonnée à une interprétation du variogramme expérimental en termes de composantes spatiales cohérentes et anomaliques. Les compétences combinées du géostatisticien, du géophysicien et éventuellement du géologue sont requises pour cette phase d'interprétation. Le géologue apporte des informations sur les structures géologiques connues ou supposées ; le géophysicien est là pour préciser la nature des artefacts géophysiques majeurs susceptibles d'affecter les données ; le géostatisticien construit le modèle de variogramme en tenant compte de ces deux types d'informations.

Idéalement, on souhaite séparer un bruit spatial (composante spatiale anomalique) d'un signal cohérent (composante spatiale cohérente) sur la seule base d'une interprétation variographique. La modélisation proposée dépend de l'application que l'on souhaite faire du jeu de vitesses (« stack », conversion profondeur, vitesses de DIX...). Une composante spatiale peut être considérée comme un bruit pour une certaine application ou comme un signal cohérent pour une autre. « Cohérent » et « anomalique » ne sont pas des propriétés intrinsèques du jeu de vitesses, ce sont des propriétés des composantes du jeu de vitesses dans le cadre du modèle géostatistique reconnu.

L'ajustement du modèle $\Gamma^M(\vec{h})$ ne peut se faire que par des fonctions de type négatif conditionnel. Dans un premier temps, les modèles de variogrammes comme le modèle de l'effet de pépite, ainsi que les modèles sphérique et exponentiel sont suffisants pour construire un modèle gigogne (à plusieurs composantes). La définition des modèles est donnée dans le cas isotrope :

modèle de l'effet de pépite :

$$\Gamma(\vec{h}) = \begin{cases} 0 & \text{si } |\vec{h}| = 0 \\ b & \text{si } |\vec{h}| > 0 \end{cases}$$

modèle sphérique :

7

$$\Gamma(\vec{\mathbf{h}}) = \begin{cases} 0 & \text{si} \, |\vec{\mathbf{h}}| > \mathbf{a} \\[2mm] \mathbf{b} \times \left[ \dfrac{3}{2} \times \dfrac{|\vec{\mathbf{h}}|}{\mathbf{a}} - \dfrac{1}{2} \times \left( \dfrac{|\vec{\mathbf{h}}|}{\mathbf{a}} \right)^3 \right] & \text{si} \, 0 \leq |\vec{\mathbf{h}}| \leq \mathbf{a} \end{cases}$$

modèle exponentiel :

$$\Gamma(\vec{\mathbf{h}}) = \mathbf{b} \times \left[ 1 - \exp\left( -\dfrac{|\vec{\mathbf{h}}|}{\mathbf{a}} \right) \right]$$

Les paramètres a et b s'appellent respectivement la portée et le palier du variogramme. Ils sont tous les deux positifs.

Le modèle de variogramme retenu $\Gamma^M$ est une combinaison linéaire de différentes composantes élémentaires classées selon leur interprétation anomalique ou cohérente :

$$\Gamma^M(\vec{h}) = \Gamma_A(\vec{h}) + \Gamma_C(\vec{h})$$

avec

$\Gamma_A$, composante du variogramme associée à la partie anomalique,
$\Gamma_C$ composante du variogramme associée à la partie cohérente.

*Voisinage*

Le voisinage regroupe l'ensemble des points participant à l'estimation de la composante anomalique située au point $\vec{\mathbf{r}_0}$.

Un voisinage dit glissant est indispensable pour toute opération de filtrage. Un voisinage unique englobant l'ensemble des échantillons du champ est très pénalisant en temps de calcul. Les dimensions du voisinage glissant doivent donc optimiser le temps de calcul sans dégrader la qualité de l'estimation.

*Krigeage factoriel*

La modélisation du variogramme du second ordre des résidus correspond à une interprétation en terme de composantes cohérentes et anomaliques. Le krigeage factoriel permet une estimation de chacune des deux composantes.

L'estimation de la composante anomalique au point $\vec{\mathbf{r}_0}$ s'effectue en calculant :

$$V_{\text{résidu anomalique}}(\vec{r}_0) = \sum_{\alpha=1}^{N_V} \lambda_\alpha \times V_{\text{résidu}}(\vec{r}_\alpha)$$

où l'ensemble des $\vec{r}_{\alpha}$ constitue le voisinage glissant de krigeage,

où les poids de krigeage sont déterminés en résolvant le système :

$$\begin{cases} \sum_{\beta=1}^{N_V} \lambda_{\beta} \times \Gamma^M(\vec{r}_{\alpha} - \vec{r}_{\beta}) + \mu_A = \Gamma_A(\vec{r}_{\alpha} - \vec{r}_0) \quad \text{pour} \quad \alpha = 1,...,N_v \\ \sum_{\beta=1}^{N_V} \lambda_{\beta} = 1 \end{cases}$$

L'estimation de la composante cohérente au point $\vec{r}_0$ peut être obtenue de la même façon par krigeage factoriel. Pour trouver les poids de krigeage correspondant, il suffit de changer dans le système de krigeage $\Gamma_A$ par $\Gamma_C$.

Cependant, un seul filtrage est nécessaire puisque par propriété du krigeage factoriel, on peut écrire :

$$V_{\text{résidu cohérent}}(\vec{r}_0) = V_{\text{résidu}}(\vec{r}_0) - V_{\text{résidu anomalique}}(\vec{r}_0)$$

c) Quantification des anomalies spatiales

*Calcul du coefficient d'anomalie spatiale*

La partie spatialement cohérente des résidus de second ordre ajoutée à la dérive, composante cohérente de premier ordre, permet de générer un champ de vitesses spatialement cohérent :

$$V_{\text{cohérent}}(\vec{r}_0) = V_{\text{dérive}}(\vec{r}_0) + V_{\text{résidu cohérent}}(\vec{r}_0)$$

Le rapport entre l'estimation de la composante anomalique et l'estimation de la composante cohérente de la donnée (exprimé en %) constitue un rapport appelé coefficient d'anomalie spatiale ou indice de qualité spatiale SQI. Il est attaché à chaque pointé de vitesses.
SQI attaché aux pointés de vitesses de stack :

$$V_{\text{coefficient d'anomalie spatiale}}(\vec{r}_0) = \frac{V_{\text{résidu anomalique}}(\vec{r}_0)}{V_{\text{cohérent}}(\vec{r}_0)} \times 100$$

d) Localisation des pointés anomaliques par interprétation du coefficient d'anomalie spatiale

La localisation des anomalies spatiales se fait à partir du coefficient d'anomalie spatiale attaché à chaque pointé du cube de vitesses. Deux options sont possibles :

- Dans le premier cas, des classes de couleur (ou de symboles) sont associées au coefficient d'anomalie spatiale SQI. Des sections dans le cube sont visualisées. Il est également possible d'interpoler sur grille le coefficient

9

d'anomalie spatiale (Figure 7a).

- Dans le second cas, le codage couleur (ou symbolique) se rapporte à la définition d'intervalles temps dans lesquels on recherche des coefficients d'anomalie spatiale supérieurs à une valeur seuil (Figure 7b).

**Revendications**

1. Procédé pour la détermination d'un indice de qualité spatiale (SQI) de données régionalisées destiné à déterminer des données à priori anomaliques et ainsi juger de la qualité des mesures ou du traitement numérique qui ont généré les données, ledit procédé comprenant :

   - une première phase d'identification des anomalies statistiques d'un premier ordre à partir du jeu de données régionalisées brutes (1), cette identification comprenant une stationnarisation des données par extraction préliminaire des dérives spatiales (2) desdites données et la détermination des résidus stationnaires associés (3), dits de premier ordre, de manière à ce que la valeur de la moyenne de données résiduelles soit raisonnablement constante dans l'espace, les anomalies étant identifiées et examinées sur les résidus de premier ordre de manière à fournir un premier critère d'anomalie du premier ordre,

   **caractérisé en ce qu'il** comprend :

   - une deuxième phase d'identification d'anomalies statistiques d'un second ordre avec extraction des composantes des résidus de premier ordre (3) considérées comme anomaliques (4) et des composantes des résidus de premier ordre (3) considérées comme cohérentes (5) dans l'espace,
   - l'établissement d'une relation quantifiée (SQI) entre toute combinaison des valeurs estimées des composantes anomaliques du premier et/ou du second ordre (4) et toute combinaison des valeurs estimées des composantes cohérentes du premier et/ou du second ordre (2, 5).

2. Procédé selon la revendication 1,
   **caractérisé en ce que** ledit établissement de la relation quantifiée est réalisé pour chaque donnée régionalisée prise individuellement.

3. Procédé selon la revendication 1,
   **caractérisé en ce que** ladite relation quantifiée est un rapport.

4. Procédé selon l'une des revendications précédentes,
   **caractérisé en ce que** ladite relation quantifiée est le rapport entre la valeur estimée de la composante anomalique du second ordre et la valeur estimée de la composante cohérente soit la somme des composantes cohérentes de premier et second ordre.

5. Procédé selon la revendication 1,
   **caractérisé en ce qu'**il comprend la localisation des anomalies spatiales à partir des valeurs du SQI de chaque donnée régionalisée.

6. Procédé selon la revendication 1,
   **caractérisé en ce que** les susdites phases d'identification s'effectuent par estimation géostatistique (krigeage), en modèle non-stationnaire pour la première phase et en modèle stationnaire pour la deuxième phase.

7. Procédé selon l'une des revendications précédentes,
   **caractérisé en ce que** l'obtention de résidus stationnaires du premier ordre sur lesquels il est possible de calculer et modéliser un variogramme est réalisée au moyen de l'estimation non-stationnaire de la dérive spatiale.

8. Procédé selon la revendication 7,
   **caractérisé en ce que** l'interprétation dudit variogramme en terme de composantes cohérente et anomalique conduit à l'estimation par modèle stationnaire de la composante anomalique du second ordre.

9. Procédé selon la revendication 1,
   **caractérisé en ce que** les susdites phases d'identification utilisent :

- la définition du voisinage de krigeage adapté à l'estimation de chacune desdites composantes anomalique et cohérente,
- l'estimation par krigeage factoriel des composantes anomalique et cohérente des résidus.

**10.** Procédé selon l'une des revendications 1 et 5,
**caractérisé en ce que**, à chacune des susdites étapes, un contrôle visuel 3D de l'analyse est réalisé, d'une part, au moyen d'une interpolation sur un fichier « grille » de n'importe quelle variable irrégulièrement échantillonnée provenant d'un fichier « point » et, d'autre part, au moyen d'un code de couleur associé à la valeur de la variable interpolée.

**11.** Procédé selon la revendication 1,
**caractérisé en ce que** l'extraction d'une dérive assurant la stationnarité des résidus est réalisée par ajustement polynomial par moindres carrés.

**Claims**

**1.** Method for determining a spatial quality index (SQI) of regionalised data and intended for determining a priori anomalistic data and accordingly assess the quality of the measurements or of the digital processing which have generated said data, said method comprising :

- a first phase for identifying the first order statistical anomalies from a set of raw regionalised data (1), this identification including a rendering said data stationary by a preliminary extraction of the spatial drifts (2) of said data and the determination of the associated first order stationary residue (3) so that the value of the average of the residual data is reasonably constant in space, the anomalies being identified and examined on the first order residue so as to provide a first order anomaly criterion,

**characterised in that** it comprises :

- a second phase for identifying the second order statistical anomalies with extraction of the components of first order residue (3) regarded as anomalistic (4) and components of first order residue (3) regarded as coherent (5) in space,
- setting up a quantified relation (SQI) between any combination of the estimated values of the anomalistic components of the first and/or second order (4) and any combination of the estimated values of the coherent components of the first and/or second order (2, 5).

**2.** Method according to claim 1,
**characterised in that** the setting up of the quantified relation is embodied for each regionalised data element taken individually.

**3.** Method according to claim 1,
**characterised in that** said quantified relation is a ratio.

**4.** Method according to one of the preceding claims,
**characterised in that** said quantified relation is the ratio between the estimated value of the second order anomalistic component and the estimated value of the coherent component is the sum of the first and second order coherent components.

**5.** Method according to claim 1,
**characterised in that** it comprises the localisation of the spatial anomalies on the basis of the values of the SQI of each regionalised data element.

**6.** Method according to claim 1,
**characterised in that** said identification phases are carried out by geostatistical estimation in a non-stationary model for the first phase and in a stationary model for the second phase.

**7.** Method according to one of the preceding claims,
**characterised in that** the obtaining first order stationary residue, on which it is possible to calculate and modelise a variogram, is carried out via a non-stationary estimation of the spatial drift.

8. Method according to claim 7,
   **characterised in that** the interpretation of said variogram in terms of anomalistic and coherent components results in the estimation by a stationary model of the second order anomalistic component.

9. Method according to claim 1,
   **characterised in that** said identification phases use:

   - the definition of the krigeage surrounding area adapted to the estimation of each of said anomalistic and coherent components,
   - the estimation by factorial krigeage of the anomalistic and coherent components of the residue.

10. Method according to claims 1 and 5,
    **characterised in that** in each of said stages, a 3D visual control of the analysis is carried out by firstly an interpolation on a "grid" file of any irregularly sampled variable originating from a "point" file, and secondly by means of a colour code associated with the value of the interpolated variable.

11. Method according to claim 1,
    **characterised in that** the extraction of a drift ensuring the stationary state of the residue stationary is effected via least error squares polynomial adjustment.

**Patentansprüche**

1. Verfahren zur Ermittlung eines Indexes von regionalisierten Daten über die Qualität der räumlichen Verhältnisse (SQI), zur Erfassung von a priori anormalen Daten und um so die Qualität der Messungen oder die digitale Verarbeitung der erzeugten Daten zu beurteilen, wobei besagtes Verfahren folgendes umfasst:

   - Eine erste Identifizierungsphase der statistischen Anomalien einer ersten Abfolge ab dem regionalisierten Brutto-Datensatz (1), wobei diese Identifizierung eine Indexierung der Daten durch vorläufige Extraktion der räumlichen Abweichungen (2) der besagten Daten und die Ermittlung der damit verbundenen stationären, d. h. erstrangigen, Residuen (3) umfasst, so dass der Durchschnittswert der restlichen Daten räumlich konstant vertretbar ist, wobei die Anomalien an Residuen ersten Ranges identifiziert und geprüft werden, um ein erstes Kriterium über Anomalien ersten Ranges abzugeben, **gekennzeichnet dadurch, dass** dieses folgendes umfasst:
   - eine zweite Identifizierungsphase von statistischen Anomalien zweiten Ranges mit Extraktion der Komponenten von Residuen ersten Ranges (3), die als anormal betrachtet werden (4) und der Komponenten von Residuen ersten Ranges (3), die räumlich als kohärent (5) betrachtet werden,
   - Aufnahme eines quantifizierten Verhältnisses (SQI) zwischen jeder Kombination geschätzter Werte von anormalen Komponenten ersten und/oder zweiten Ranges (4) und jede Kombination von geschätzten Werten kohärenter Komponenten ersten und/oder zweiten Ranges (2, 5).

2. Verfahren nach Anspruch 1, **gekennzeichnet dadurch, dass** besagte Auflistung des quantifizierten Verhältnisses für jede einzeln aufgenommenen, regionalisierten Daten erstellt worden ist.

3. Verfahren nach Anspruch 1, **gekennzeichnet dadurch, dass** besagtes quantifiziertes Verhältnis ein Sachbericht ist.

4. Verfahren nach einem der vorangehenden Ansprüche, **gekennzeichnet dadurch, dass** besagter quantifizierter Zusammenhang das Verhältnis zwischen dem geschätzten Wert der anormalen Komponenten zweiten Ranges und dem geschätzten Wert der kohärenten Komponenten ist, das heisst die Summe der kohärenten Komponenten ersten und zweiten Ranges.

5. Verfahren nach Anspruch 1, **gekennzeichnet dadurch, dass** dieses die Lokalisierung der räumlichen Anomalien, ausgehend von den Werten des Indexes jeder regionalisierten Daten über die Qualität räumlicher Bedingungen, umfasst.

6. Verfahren nach Anspruch 1, **gekennzeichnet dadurch, dass** die besagten Identifizierungsphasen durch Geostatistische Abschätzung (Kriging) an einem nicht stationären Modell für die erste Phase und an einem stationären Modell für die zweite Phase erfolgen.

7. Verfahren nach einem der vorangehenden Ansprüche, **gekennzeichnet dadurch, dass** der Erhalt von stationären Residuen ersten Ranges, auf welche hin es möglich ist, ein Variogramm zu berechnen und zu modellieren, mittels der nicht stationären Schätzung der räumlichen Abweichung erfolgt.

8. Verfahren nach Anspruch 7, **gekennzeichnet dadurch, dass** die Interpretation des genannten Variogramms in Bezug auf die kohärenten und anormalen Komponenten zur Schätzung über ein stationäres Modell der anormalen Komponenten zweiten Ranges führt.

9. Verfahren nach Anspruch 1, **gekennzeichnet dadurch, dass** besagte Identifizierungsphasen folgendes benutzen:

   - die Definition der Nachbarwerte der geostatistischen Schätzung ("Kriging"), angepasst an die Schätzung jeder der besagten anormalen und kohärenten Komponenten,
   - die Schätzung durch faktorielle geostatistische Schätzung der anormalen und kohärenten Komponenten der Residuen.

10. Verfahren nach einem der Ansprüche 1 und 5, **gekennzeichnet dadurch, dass** in jeder der besagten Phasen eine visuelle Kontrolle 3D der Analyse durchgeführt wird, einerseits, mittels einer Interpolation auf einer "Tabellen"-Datei von einer beliebigen unregelmäßig gewählten, aus irgendeiner "Punkt"-Datei stammenden Variablen und andererseits, mittels eines dem Wert einer interpolierten Variablen zugeordneten Farbencodes.

11. Verfahren nach Anspruch 1, **gekennzeichnet dadurch, dass** die Extraktion einer Abweichung, die die Stationarität der Residuen sicherstellt, durch polynomiale Anpassung durch die Methode der kleinsten Quadrate erfolgt.

## FIG. 1

| QC 1 | QC 2 | QC 3 | QC 4 | QC 5 |
|------|------|------|------|------|

**vitesses brutes** — 1

**FILTRAGE DERIVE / RESIDUS**

**résidus** — 3

**derive** — 2

**FILTRAGE ANOMALIES RESIDUS COHERENTS**

**anomalies** — 4

**résidus cohérents** — 5

**derive** — 2

**Anomalies spatiales** — 4

**vitesses cohérentes** — 6

**+**

**%**

**COEFFICIENT D'ANOMALIE SPATIALE SQI** — 7

EP 1 341 094 B1

EP 1 341 094 B1

## FIG. 2a

longitudinal    transversal

temps

## FIG. 2c

longitudinal    transversal

temps

## FIG. 2b

transversal

longitudinal

## FIG. 5

$V_1$   $V_j$   $V_2$   variable

$t_1$

$P_1$

$t_j$

$P_j$

$t_2$

$P_2$

temp
s

**FIG. 6**

**FIG. 3a**

HISTOGRAMME

**FIG. 3b**

CROSS-PLOT
temps/variable

FIG. 4

# FIG. 7a

## FIG. 7b

coeff. d'anomalie
spatiale

coeff. d'anomalie
spatiale

**coefficient
d'anomalie
spatiale (en %)**

○ 100 - X1
* X1 - X2
• X2 - X3
* X3 - X4
○ X4 - 100

**coefficient d'anomalie
spatiale > X%**

*intervalles temps*

■ [0, 1000]    ms
+ [1000, 2000]   ms

EP 1 341 094 B1

**EP 1 341 094 B1**